# EUROPEAN PATENT SPECIFICATION

(11) **EP 4 105 041 B1**
(45) Date of publication and mention of the grant of the patent: **20.03.2024**
(21) Application number: 22172972.6
(22) Date of filing: 12.05.2022
(51) Int. Cl.: B60C 11/03

(54) **TIRE**
REIFEN
PNEUMATIQUE

(30) Priority: 14.06.2021 JP 2021098754
(43) Date of publication of application: 21.12.2022
(73) Proprietor: Sumitomo Rubber Industries, Ltd., Kobe-shi, Hyogo-ken 651-0072 (JP)
(72) Inventor: HASHIMOTO, Yuto, Kobe-shi, 651-0072 (JP)
(74) Representative: Manitz Finsterwald Patent- und Rechtsanwaltspartnerschaft mbB

(56) References cited:
- CN-A- 112 248 720
- US-A- 5 213 641

## Description

### FIELD OF THE INVENTION

The present invention relates to a tire.

### BACKGROUND OF THE INVENITON

Japanese Unexamined Patent Application Publication No. 2018-134960 (Patent Document 1) has proposed a tire having a shoulder land region provided with a plurality of shoulder axial grooves. The above-mentioned tire is expected to improve on-snow performance by the shoulder axial grooves.
US 5 213 641 A discloses a tire comprising the features according to the preamble of claim 1.
CN 112 248 720 A discloses a tire comprising features according to a related technology, but without inner and outer groove portions of shoulder axial grooves being inclined to different sides with respect to a tire axial direction.

### SUMMARY OF THE INVENTION

### [Problems to be solved by the Invention]

In recent years, there has been a demand for further improvement in the on-snow performance, especially in cornering performance on snow.

The present invention was made in view of the above, and a primary object thereof is to provide a tire capable of exerting excellent on-snow cornering performance.

### [Means for Solving the Problems]

The present invention is a tire including:
a tread portion with a position thereof when mounted on a vehicle being specified, wherein
the tread portion includes
a first tread edge to be positioned on an outer side of the vehicle when mounted on the vehicle,
a second tread edge to be positioned on an inner side of the vehicle when mounted on a vehicle,
a plurality of circumferential grooves extending continuously in a tire circumferential direction between the first tread edge and the second tread edge, and
a plurality of land regions divided by the circumferential grooves, wherein
the circumferential grooves include an outer shoulder circumferential groove arranged closest to the first tread edge and an inner shoulder circumferential groove arranged closest to the second tread edge,
the land regions include an outer shoulder land region arranged outside the outer shoulder circumferential groove in a tire axial direction and including the first tread edge, and an inner shoulder land region arranged outside the inner shoulder circumferential groove in the tire axial direction and including the second tread edge,
the outer shoulder land region is provided with a plurality of outer shoulder axial grooves each extending from the outer shoulder circumferential groove to a position beyond the first tread edge,
the inner shoulder land region is provided with a plurality of inner shoulder axial grooves each extending from the inner shoulder circumferential groove to a position beyond the second tread edge,
between the outer shoulder circumferential groove and the first tread edge, each of the outer shoulder axial grooves includes an inner groove portion inclined to a first side with respect to the tire axial direction and an outer groove portion arranged outside the inner groove portion in the tire axial direction and inclined to a second side opposite to the first side with respect to the tire axial direction so that each of the outer shoulder axial grooves is bent convexly to one side in the tire circumferential direction,
between the inner shoulder circumferential groove and the second tread edge, each of the inner shoulder axial grooves includes an inner groove portion inclined to the first side with respect to the tire axial direction and an outer groove portion arranged outside the inner groove portion in the tire axial direction and inclined to the second side with respect to the tire axial direction so that each of the inner shoulder axial grooves is bent convexly to the other side in the tire circumferential direction,
the inner groove portion of each of the inner shoulder axial grooves has an angle Θ2i with respect to the tire axial direction greater than an angle θ1i of the inner groove portion of each of the outer shoulder axial grooves with respect to the tire axial direction, and
the outer groove portion of each of the inner shoulder axial grooves has an angle θ2o with respect to the tire axial direction smaller than an angle θ1o of the outer groove portion of each of the outer shoulder axial grooves with respect to the tire axial direction.

### [Effects of the Invention]

It is possible that the tire of the present invention exerts excellent on-snow cornering performance by adopting the above configuration.

### BRIEF DESCRIPTION OF THE DRAWINGS

FIG. 1 is a development view of a tire according to an embodiment of the present invention.
FIG. 2 is an enlarged view of an outer shoulder land region and an inner shoulder land region of FIG. 1.
FIG. 3 is an enlarged view of the outer shoulder land region and an outer middle land region of FIG. 1.
FIG. 4 is an enlarged view of the inner shoulder land region and an inner middle land region of FIG. 1.
FIG. 5 is an enlarged view of a crown land region of FIG. 1.
FIG. 6 is a development view of the tread portion of a reference tire.

### DETAILED DESCRIPTION OF THE INVENTION

An embodiment of the present invention will now be described in conjunction with accompanying drawings.

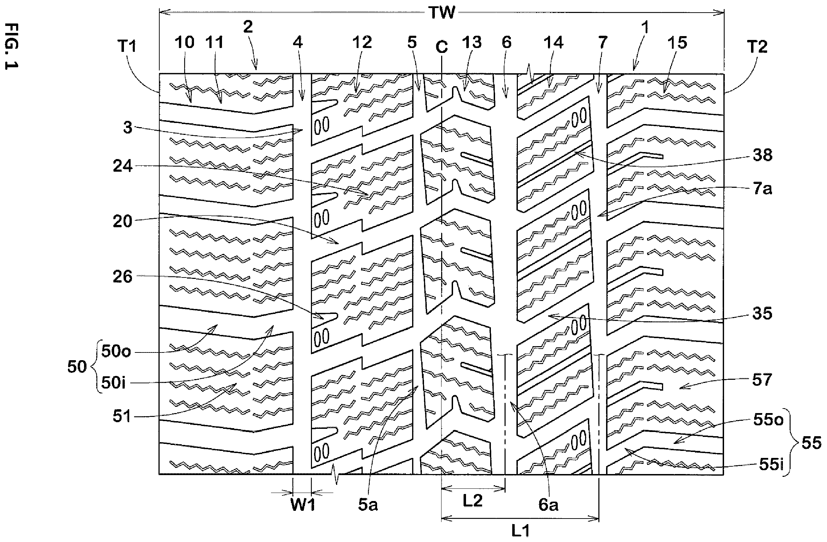

FIG. 1 is a development view of a tread portion 2 of a tire 1 of the present embodiment. As shown in FIG. 1, the tire 1 of the present embodiment is used, for example, as a pneumatic tire for passenger cars intended for use in winter. However, the tire 1 of the present invention is not limited to such a configuration.

The tire 1 of the present embodiment has the tread portion 2 of which position when mounted on a vehicle is specified, for example. The mounting position on a vehicle is indicated, for example, by letters or marks on sidewall portions and the like (not shown). Further, the tread portion 2, for example, is configured in an asymmetric pattern (meaning that the tread pattern is not linearly symmetric with respect to a tire equator (C)).

The tread portion 2 includes a first tread edge T1 intended to be positioned, when mounted on a vehicle, on an outer side of the vehicle, and a second tread edge T2 intended, when mounted on a vehicle, to be positioned on an inner side of the vehicle. The first tread edge T1 and the second tread edge T2 correspond to the outermost ground contacting positions in a tire axial direction when the tire 1 in a standard state is in contact with a flat surface with zero camber angle by being loaded with 70% of a standard tire load.

The term "standard state" refers to a state in which the tire 1 is mounted on a standard rim, inflated to a standard inner pressure, and loaded with no tire load in the case of a standardized pneumatic tire. In the case of tires for which various standards are not defined and non-pneumatic tires, the aforementioned standard state means a state of the tire loaded with no tire load in the standard usage condition according to its purpose of use. In the present specification, unless otherwise noted, the dimensions and the like of various parts of the tire are values measured in the standard state.

The term "standard rim" refers to a wheel rim specified for the concerned tire by a standard included in a standardization system on which the tire is based, for example, the "normal wheel rim" in JATMA, "Design Rim" in TRA, and "Measuring Rim" in ETRTO.

The term "standard inner pressure" refers to air pressure specified for the concerned tire by a standard included in a standardization system on which the tire is based, for example, the maximum air pressure in JATMA, maximum value listed in the "TIRE LOAD LIMITS AT VARIOUS COLD INFLATION PRESSURES" table in TRA, and "INFLATION PRESSURE" in ETRTO.

The term "standard tire load" refers to a tire load specified for the concerned tire by a standard included in a standardization system on which the tire is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO. Further, in the case of tires for which various standards are not specified, the term "standard tire load" refers to the maximum load applicable when using the tire in accordance with the standards mentioned above.

The tread portion 2 includes a plurality of circumferential grooves 3 extending continuously in a tire circumferential direction between the first tread edge T1 and the second tread edge T2, and a plurality of land regions 10 divided by the circumferential grooves 3. The tire 1 of the present embodiment is configured as a so-called 5-rib tire including 5 land regions 10 in the tread portion 2 divided by 4 circumferential grooves 3. However, the present invention is not limited to such a configuration, and for example, it may be a so-called 4-rib tire in which the tread portion 2 is composed of three circumferential grooves 3 and four land regions 10.

The circumferential grooves 3 include an outer shoulder circumferential groove 4 and an inner shoulder circumferential groove 7. The outer shoulder circumferential groove 4 is provided closest to the first tread edge T1 among the plural circumferential grooves 3. The inner shoulder circumferential groove 7 is provided closest to the second tread edge T2 among the plural circumferential grooves 3.

In addition to the outer shoulder circumferential groove 4 and the inner shoulder circumferential groove 7, the circumferential grooves 3 of the present embodiment include an outer crown circumferential groove 5 and an inner crown circumferential groove 6. The outer crown circumferential groove 5 is arranged between the outer shoulder circumferential groove 4 and the tire equator (C). The inner crown circumferential groove 6 is arranged between the inner shoulder circumferential groove 7 and the tire equator (C).

The circumferential grooves 3 can adopt various forms, such as those extending linearly in the tire circumferential direction or those extending in a zigzag manner and the like. The specific forms in the present embodiment will be described below.

A distance L1 in the tire axial direction from a groove centerline of the outer shoulder circumferential groove 4 or the inner shoulder circumferential groove 7 to the tire equator (C) is 20% to 35% of a tread width TW, for example. A distance L2 in the tire axial direction from a groove centerline of the outer crown circumferential groove 5 or the inner crown circumferential groove 6 to the tire equator (C) is 3% to 15% of the tread width TW, for example. It should be noted that the tread width TW is a distance in the tire axial direction from the first tread edge T1 to the second tread edge T2 in the standard state described above.

It is preferred that the circumferential grooves 3 each has a groove width W1 of at least 3 mm or more. In a preferred embodiment, the groove width W1 of the circumferential grooves 3 is 2.0% or more and 6.0% or less of the tread width TW. In the present embodiment, the inner crown circumferential groove 6 has the largest groove width among the four circumferential grooves 3.

The plural land regions 10 include an outer shoulder land region 11 and an inner shoulder land region 15. The outer shoulder land region 11 is arranged axially outside the outer shoulder circumferential groove 4 and includes the first tread edge T1. The inner shoulder land region 15 is arranged axially outside the inner shoulder circumferential groove 7 and includes the second tread edge T2.

The plurality of the land regions 10 in the present embodiment includes an outer middle land region 12, an inner middle land region 14, and a crown land region 13, in addition to the outer shoulder land region 11 and the inner shoulder land region 15 described above. The outer middle land region 12 is demarcated between the outer shoulder circumferential groove 4 and the outer crown circumferential groove 5. That is, the outer middle land region 12 is adjacent to the outer shoulder land region 11 via the outer shoulder circumferential groove 4. The inner middle land region 14 is demarcated between the inner shoulder circumferential groove 7 and the inner crown circumferential groove 6. That is, the inner middle land region 14 is adjacent to the inner shoulder land region 15 via the inner shoulder circumferential groove 7. The crown land region 13 is demarcated between the outer crown circumferential groove 5 and the inner crown circumferential groove 6.

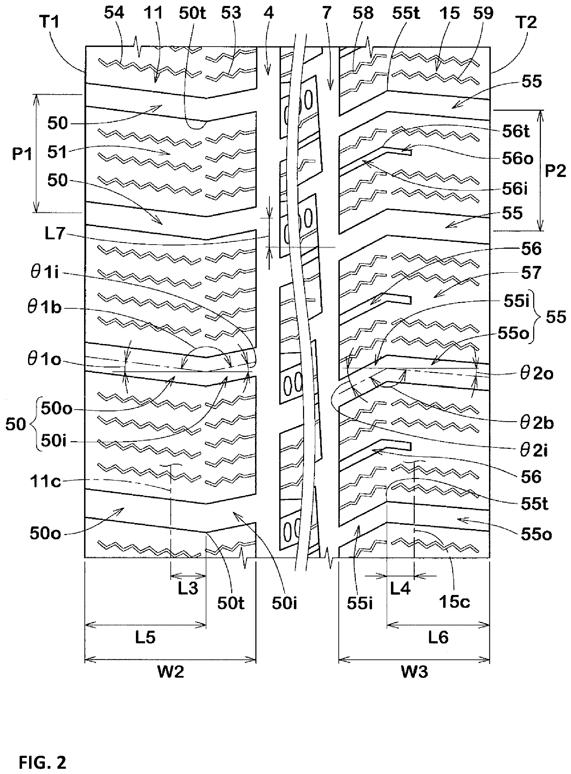

FIG. 2 shows an enlarged view of the outer shoulder land region 11 and the inner shoulder land region 15. It is needless to say that the outer middle land region 12, the inner middle land region 14, and the crown land region 13 are omitted in FIG. 2 for ease of understanding the invention.

As shown in FIG. 2, the outer shoulder land region 11 is provided with a plurality of outer shoulder axial grooves 50. Each of the outer shoulder axial grooves 50 extends from the outer shoulder circumferential groove 4 to a position beyond the first tread edge. It should be noted that in the drawings of the present specification, the regions axially outside the first tread edge T1 and the second tread edge T2 are omitted. Further, the inner shoulder land region 15 is provided with a plurality of inner shoulder axial grooves 55. Each of the inner shoulder axial grooves 55 extends from the inner shoulder circumferential groove 7 to a position beyond the second tread edge T2.

Between the outer shoulder circumferential groove 4 and the first tread edge T1, each of the outer shoulder axial grooves 50 includes an inner groove portion (50i) and an outer groove portion (50o) arranged axially outside the inner groove portion (50i). The inner groove portion (50i) is inclined to a first side (upward to the right in each drawing of the present specification) with respect to the tire axial direction. The outer groove portion (50o) is inclined to a second side (downward to the right in each drawing of the present specification) opposite to the first side with respect to the tire axial direction. Thereby, each of the outer shoulder axial grooves 50 is bent so as to be convex to one side in the tire circumferential direction.

Between the inner shoulder circumferential groove 7 and the second tread edge T2, each of the inner shoulder axial grooves 55 includes an inner groove portion (55i) and an outer groove portion (55o) arranged axially outside the inner groove portion (55i). The inner groove portion (55i) is inclined to the first side with respect to the tire axial direction. The outer groove portion (55o) is inclined to the second side with respect to the tire axial direction. Thereby, each of the inner shoulder axial grooves 55 is bent so as to be convex to the other side in the tire circumferential direction.

It should be noted that the expression "the axial groove is bent so as to be convex in the tire circumferential direction" in the present specification refers to a configuration in which the axial groove is bent locally so that, at least, the bent region of the groove centerline of the axial groove is within 10% or less of the total length of the axial groove. In a preferred manner, each of the outer shoulder axial grooves 50 and the inner shoulder axial grooves 55 of the present embodiment has the bent region of the groove centerline within 5% or less of the total length of the groove. In a more preferred manner, the radius of curvature in the bent region of the groove centerline of these axial grooves is 1.0 mm or less.

The inner groove portion (55i) of each of the inner shoulder axial grooves 55 has an angle Θ2i with respect to the tire axial direction greater than an angle θ1i of the inner groove portion (50i) of each of the outer shoulder axial grooves 50 with respect to the tire axial direction. Further, the outer groove portion (55o) of each of the inner shoulder axial grooves 55 has an angle θ2o with respect to the tire axial direction smaller than an angle θ1o of the outer groove portion (55o) of each of the outer shoulder axial grooves 50 with respect to the tire axial direction. By adopting the above configuration, it is possible that the tire 1 exerts excellent on-snow cornering performance. The following mechanisms can be inferred as the reasons for this.

Since the outer shoulder axial grooves 50 and the inner shoulder axial grooves 55 are bent, the inner shoulder axial grooves 55 provide a large snow shearing force and large frictional force due to edges during cornering at relatively small slip angles. Further, during cornering at relatively large slip angles, the outer shoulder axial grooves 50 provide large snow shearing force and large frictional force due to the edges. Therefore, the on-snow cornering performance is improved over a wide range of slip angles.

Furthermore, since the outer shoulder axial grooves 50 and the inner shoulder axial grooves 55 are bent so as to be convex in the opposite sides, relatively large snow shearing force and frictional force due to the edges can be expected in various cornering conditions.

In addition, since the angle Θ2i of the inner groove portion (55i) of each of the inner shoulder axial grooves 55 is larger than the angle θ1i of the inner groove portion (50i) of each of the outer shoulder axial grooves 50, it is possible that a pattern rigidity in the tire axial direction of the inner shoulder land region 15 is increased, therefore, an effect of improving steering stability during cornering on snow and on ice can be expected. On the other hand, since the angle θ2o of the outer groove portion (55o) of each of the inner shoulder axial grooves 55 is smaller than the angle θ1o of the outer groove portion (50o) of each of the outer shoulder axial grooves 50, it is possible that the edges of the outer groove portions (50o) of the outer shoulder axial grooves 50 provide large frictional forces in the tire axial direction. Further, the angular distribution configured as such moderately decreases the rigidity of the outer shoulder land region 11, therefore, the transient characteristics of a grip force on snow and ice with respect to changes in ground contact pressure become linear. Thus, when cornering on snow or ice, it becomes easier for the driver to grasp the limit grip force of the tire. In the present invention, it is considered that excellent on-snow cornering performance can be exerted by such a mechanism.

The more detailed configuration of the present embodiment will now be described. It should be noted that each of the configurations described below is a specific form of the present embodiment. Therefore, it goes without saying that the present invention can exert the effects described above even if it does not have the configurations described below. Further, even if any one of the configurations described below is applied alone to the tire of the present invention, which has the features described above, improvement in performance according to each configuration can be expected. Furthermore, when some of the configurations described below are applied in combination, a combined performance improvement can be expected in accordance with each configuration.

As shown in FIG. 1, the outer shoulder circumferential groove 4 extends linearly with a constant groove width, for example. On the other hand, the inner crown circumferential groove 6 includes a plurality of width-changing portions (6a), the width of which gradually and continuously decreases toward the one side in the tire circumferential direction (the convex side of the outer shoulder axial grooves 50), arranged in the tire circumferential direction. Further, the inner shoulder circumferential groove 7 also includes a plurality of width-changing portions (7a), the width of which gradually and continuously decreases toward the one side in the tire circumferential direction, arranged in the tire circumferential direction. The outer crown circumferential groove 5 includes a plurality of width-changing portions (5a), the width of which gradually and continuously decreases toward the other side in the tire circumferential direction (the convex side of the inner shoulder axial grooves 55), arranged in the tire circumferential direction. It is possible that the circumferential grooves 3, which include these width-changing portions, compact snow strongly inside, which helps to improve the on-snow cornering performance. Furthermore, by specifying the width-decreasing side of the width-changing portions (5a) as described above, a large snow shearing force is exerted both during acceleration and deceleration.

As shown in FIG. 2, it is preferred that the ground contacting surface of the inner shoulder land region 15 has a width W3 in the tire axial direction smaller than a width W2 in the tire axial direction of the ground contacting surface of the outer shoulder land region 11 in the present embodiment. Specifically, the width W2 of the inner shoulder land region 15 is 75% to 95%, preferably 80% to 90%, of the width W2 of the outer shoulder land region 11. Therefore, the inner shoulder land region 15 is easier to deform moderately, thereby, it is possible that excellent on-snow performance is obtained.

The angle θ1i of the inner groove portion (50i) of each of the outer shoulder axial grooves 50 is 5 to 15 degrees, for example. The angle θ2i of the inner groove portion (55i) of each of the inner shoulder axial grooves 55 is 20 to 35 degrees, for example. Further, the difference between the angle θ1i and the angle Θ2i is 5 to 20 degrees, for example. In this way, by making the difference between the angles θ1i and Θ2i relatively large, the difference can be increased between the air movement speed from the outer shoulder circumferential groove 4 into the outer shoulder axial grooves 50 and the air movement speed from the inner shoulder circumferential groove 7 into the inner shoulder axial grooves 55, therefore, it is possible that the noise generated by each of the axial grooves is effectively turned into white noise.

The angle θ1o of the outer groove portion (50o) of each of the outer shoulder axial grooves 50 is 5 to 10 degrees, for example. The angle θ2o of the outer groove portion (55o) of each of the inner shoulder axial grooves 55 is 3 to 7 degrees, for example. Further, the difference between the angle θ1o and the angle θ2o is 10 degrees or less, for example. Therefore, it is possible that the difference in rigidity of the land region near the first tread edge T1 and near the second tread edge T2 is decreased. Thereby, the response during steering becomes linear, therefore, it is possible that excellent on-snow cornering performance is obtained.

In a more preferred embodiments, the difference between the angle θ1o and the angle θ2o is smaller than the difference between the angle θ1i and the angle Θ2i. Therefore, it is possible that the above-mentioned improvement in noise performance and the above-mentioned improvement in the on-snow cornering performance are obtained in a good balance.

In the present embodiment, a bending angle θ1b between the inner groove portion (50i) and the outer groove portion (50o) of each of the outer shoulder axial grooves 50 is larger than a bending angle θ2b between the inner groove portion (55i) and the outer groove portion (55o) of each of the inner shoulder axial grooves 55. Therefore, it is possible that the frequency bands of various noises generated by these axial grooves are dispersed, thereby, the noise performance is improved. In addition, the bending angle θ1b of each of the outer shoulder axial grooves 50 is relatively large, therefore, it is possible that decrease in the rigidity in the tire axial direction of the outer shoulder land region 11 caused by the outer shoulder axial grooves 50 is suppressed, thereby, it is possible that the on-snow cornering performance is maintained.

As shown in FIG. 2, the bending angle θ1b of each of the outer shoulder axial grooves 50 and the bending angle θ2b of each of the inner shoulder axial grooves 55 are 135 to 170 degrees, for example. It is more preferred that the bending angle θ1b of each of the outer shoulder axial grooves 50 is 150 to 170 degrees. It is more preferred that the bending angle θ2b of each of the inner shoulder axial grooves 55 is 140 to 160 degrees. In a more preferred embodiment, the bending angle θ1b is 101% to 120% of the bending angle θ2b, and in an even more preferred embodiment, it is 105% to 115% of the bending angle θ2b. The angular arrangement configured as such improves the noise performance and the on-snow cornering performance in a good balance.

In the present embodiment, an angular difference (θ1b-θ2b) between the bending angle θ1b and the bending angle θ2b is preferably 3 degrees or more, more preferably 8 degrees or more, and preferably 28 degrees or less, more preferably 18 degrees or less. Therefore, it is possible that sufficient on-snow cornering performance is exerted while the noise performance is improved.

Each of the outer shoulder axial grooves 50 includes a bending vertex (50t) between the inner groove portion (50i) and the outer groove portion (50o). The bending vertex (50t) of each of the outer shoulder axial grooves 50 is located axially inside a center position (11c) in the tire axial direction of the ground contacting surface of the outer shoulder land region 11. A distance L3 in the tire axial direction from the center position (11c) to the bending vertex (50t) is 15% to 25% of the width W2 in the tire axial direction of the ground contacting surface of the outer shoulder land region 11, for example. It is possible that the outer shoulder axial grooves 50 configured as such provide excellent noise performance while suppressing uneven wear in the outer shoulder land region 11.

From the similar point of view, each of the inner shoulder axial grooves 55 includes a bending vertex (55t) positioned between the inner groove portion (55i) and the outer groove portion (55o). The bending vertex (55t) of each of the inner shoulder axial grooves 55 is located axially inside a center position (15c) in the tire axial direction of the ground contacting surface of the inner shoulder land region 15. A distance L4 in the tire axial direction from the center position (15c) to the bending vertex (55t) is 15% to 25% of the width W3 in the tire axial direction of the ground contacting surface of the inner shoulder land region 15, for example.

In a more preferred embodiment, it is preferred that the distance L4 is smaller than the distance L3. Thereby, the noise generated by each axial groove is more easily turned into white noise.

A length L5 in the tire axial direction of the outer groove portion (50o) of each of the outer shoulder axial grooves 50 is, for example, 60% to 80%, preferably 65% to 75%, of the width W2 in the tire axial direction of the ground contacting surface of the outer shoulder land region 11. Further, a length L6 in the tire axial direction of the outer groove portion (55o) of each of the inner shoulder axial grooves 55 is, for example, 60% to 75%, preferably 65% to 70%, of the width W3 in the tire axial direction of the ground contacting surface of the inner shoulder land region 15.

It is preferred that the length L5 in the tire axial direction of the outer groove portion (50o) of each of the outer shoulder axial grooves 50 is larger than a length L6 in the tire axial direction of the outer groove portion (55o) of each of the inner shoulder axial grooves 55. Specifically, the length L5 of the outer groove portion (50o) of each of the outer shoulder axial grooves 50 is 105% to 130% of the length L6 of the outer groove portion (55o) of each of the inner shoulder axial grooves 55. Therefore, the rigidity of the outer shoulder land region 11 near the first tread edge T1 is secured, thereby, excellent on-snow cornering performance is obtained.

It is preferred that an inner end in the tire axial direction of each of the inner shoulder axial grooves 55 is displaced in the tire axial direction with respect to an inner end in the tire axial direction of a respective one of the outer shoulder axial grooves 50. It should be noted that this configuration means that at least the inner end of the groove center line of each of the inner shoulder axial grooves 55 and the inner end of the groove center line of a respective one of the outer shoulder axial grooves 50 are misaligned in the tire circumferential direction. A distance L7 between the inner end of one of the inner shoulder axial grooves 55 and the inner end of one of the outer shoulder axial grooves 50 adjacent thereto in the closest manner in the tire circumferential direction is 3 to 15 mm, and preferably 5 to 10 mm, for example. By the arrangement of each of the axial grooves configured as such, it is possible that the air input from the circumferential groove side is dispersed, which helps to improve the noise performance.

A one pitch length P1 in the tire circumferential direction of the outer shoulder axial grooves 50 is, for example, 65% to 75% of the width W2 in the tire axial direction of the ground contacting surface of the outer shoulder land region 11. The one pitch length P2 in the tire circumferential direction of the inner shoulder axial grooves 55 is, for example, 75% to 90% of the width W3 in the tire axial direction of the ground contacting surface of the inner shoulder land region 15.

Each of maximum groove widths of the outer shoulder axial grooves 50 and the inner shoulder axial grooves 55 is preferably 3.0 to 8.0 mm, and more preferably 4.0 to 7.0 mm. In an even more preferred embodiment, the maximum groove width of the plurality of the outer shoulder axial grooves 50 is greater than the maximum groove width of the plurality of the inner shoulder axial grooves 55. Therefore, the outer shoulder axial grooves 50 provide large snow shearing forces, thereby, the on-snow cornering performance is improved.

Each of the maximum depths of the outer shoulder axial grooves 50 and the inner shoulder axial grooves 55 are preferably 8.0 to 10.0 mm, and more preferably 8.0 to 9.0 mm. The outer shoulder axial grooves 50 and the inner shoulder axial grooves 55 configured as such improve the noise performance and the on-snow cornering performance in a good balance.

The outer shoulder land region 11 includes, for example, a plurality of outer shoulder blocks 51 divided by a plurality of the outer shoulder axial grooves 50. The outer shoulder blocks 51 are not provided with a groove and are provided with a plurality of sipes. The outer shoulder blocks 51 of the present embodiment are provided with, for example, a plurality of first outer shoulder sipes 53 and a plurality of second outer shoulder sipes 54.

In the present specification, the term "sipe" refers to an incision element having a small width, where the width between two inner walls facing each other and extending substantially parallel to each other is 1.5 mm or less. In addition, the expression "substantially parallel" means that the angle between the two inner walls is 10 degrees or less. The width of the sipe is preferably 0.5 to 1.5 mm, and more preferably 0.4 to 1.0 mm. Each of the sipes in the present embodiment is configured as a so-called 3D sipe extending in a zigzag manner in a tread plan view and also extending in a zigzag manner in a depth direction of the sipe.

The configuration of the sipes is not particularly limited, and in another embodiment, at least one of the sipe edges on both sides may be chamfered. Further, the bottom of each of the sipes may be continuous with a flask bottom having a width larger than 1.5 mm.

Each of the first outer shoulder sipes 53 extends axially outward from the outer shoulder circumferential groove 4 to terminate to have a closed end within a respective one of the outer shoulder blocks 51, for example. The first outer shoulder sipes 53 in the present embodiment extends along the inner groove portions (50i) of the outer shoulder axial grooves 50, for example. It is possible that the first outer shoulder sipes 53 configured as such improve the on-snow performance while suppressing the uneven wear of the outer shoulder land region 11.

The second outer shoulder sipes 54 are provided, for example, axially outside the first outer shoulder sipes 53, and each having both ends terminating within a respective one of the outer shoulder blocks 51. The second outer shoulder sipes 54 of the present embodiment extends along the outer groove portions (50o) of the outer shoulder axial grooves 50, for example.

In a more preferred embodiment, it is preferred that the number of the second outer shoulder sipes 54 is less than the number of first outer shoulder sipes 53 in each of the outer shoulder blocks 51. By the sipe arrangement configured as such, it is possible that the steering response is made linear even when cornering at a large slip angle while the uneven wear near the first tread edge T1 is suppressed.

The inner shoulder land region 15 is provided with a plurality of inner shoulder terminating grooves 56. Each of the inner shoulder terminating grooves 56 extends axially inward from the inner shoulder circumferential groove 7 and terminates to have a closed end without reaching the second tread edge T2. The inner shoulder terminating grooves 56 configured as such are helpful for improving the noise performance and the on-snow cornering performance in a good balance.

Between the inner shoulder circumferential groove 7 and the second tread edge T2, each of the plurality of the inner shoulder terminating grooves 56 includes an inner groove portion (56i) and an outer groove portion (56o) arranged axially outside the inner groove portion (56i). The inner groove portion (56i) is inclined to the first side with respect to the tire axial direction. The outer groove portion (56o) is inclined to the second side. As a result, each of the inner shoulder terminating grooves 56 is bent so as to be convex to the same side as the inner shoulder axial grooves 55. It is possible that the inner shoulder terminating grooves 56 configured as such exert the effects described above while suppressing the uneven wear of the inner shoulder land region 15.

The bending angle θ2b of the inner shoulder axial grooves 55 described above can be applied to a bending angle between the inner groove portion (56i) and the outer groove portion (56o) of each of the inner shoulder terminating grooves 56. Further, the angle Θ2i of the inner groove portion (55i) of each of the inner shoulder axial grooves 55 described above can be applied to an angle with respect to the tire axial direction of the inner groove portion (56i) of each of the inner shoulder terminating grooves 56. Similarly, the above-mentioned angle θ2o of the outer groove portion (55o) of each of the inner shoulder axial grooves 55 can be applied to an angle with respect to the tire axial direction of the outer groove portion (56o) of each of the inner shoulder terminating grooves 56.

It is preferred that a length in the tire axial direction of the outer groove portion (56o) of each of the inner shoulder terminating grooves 56 is smaller than a length in the tire axial direction of the inner groove portion (56i) of each of the inner shoulder terminating grooves 56. As a result, a sufficient distance between the inner shoulder terminating grooves 56 and the second tread edge T2 is secured, therefore, decrease in the rigidity near the second tread edge T2 is suppressed, thereby, excellent on-snow cornering performance is exerted.

The maximum groove width of each of the plurality of the inner shoulder terminating grooves 56 is smaller than the maximum groove width of each of the plurality of the inner shoulder axial grooves 55. The maximum groove width of each of the inner shoulder terminating grooves 56 is, for example, 3.0 mm or less, and more preferably 2.5 mm or less. Further, the maximum depth of each of the plurality of the inner shoulder terminating grooves 56 is smaller than the maximum depth of each of the plurality of the inner shoulder axial grooves 55. The maximum depth of each of the inner shoulder terminating grooves 56 is, for example, 3.0 to 7.0 mm, and preferably 4.0 to 6.0 mm.

Each of the inner shoulder terminating grooves 56 includes a bending vertex (56t) positioned between the inner groove portion (56i) and the outer groove portion (56o). The distance in the tire axial direction between the bending vertex (56t) of the inner shoulder terminating grooves 56 and the bending vertex (55t) of the inner shoulder axial grooves 55 is, for example, 10 mm or less. Thereby, the inner shoulder terminating grooves 56 and the inner shoulder axial grooves 55 work together, therefore, it is possible that the on-snow cornering performance is improved.

In another embodiment, the bending vertex (56t) of each of the inner shoulder terminating grooves 56 may be located axially inside the bending vertex (55t) of each of the inner shoulder axial grooves 55. Therefore, the uneven wear in the inner shoulder land region 15 is suppressed.

The inner shoulder land region 15 includes, for example, a plurality of inner shoulder blocks 57 divided by a plurality of the inner shoulder axial grooves 55. The inner shoulder blocks 57 of the present embodiment are provided with, for example, a plurality of first inner shoulder sipes 58 and a plurality of second inner shoulder sipes 59.

Each of the first inner shoulder sipes 58 extends axially outward from the inner shoulder circumferential groove 7 to terminate to have a closed end within a respective one of the inner shoulder blocks 57, for example. The first inner shoulder sipes 58 of the present embodiment extends along, for example, the inner groove portions (55i) of the inner shoulder axial grooves 55. The first inner shoulder sipes 58 configured as such improve the steering stability on a dry road surface and the on-snow performance in a good balance.

The second inner shoulder sipes 59 are provided, for example, axially outside the first inner shoulder sipes 58, and each have both ends terminating within a respective one of the inner shoulder blocks 57. The second inner shoulder sipes 59 of the present embodiment extend along, for example, the outer groove portions (55o) of the inner shoulder axial grooves 55. The second inner shoulder sipes 59 configured as improve the steering stability on a dry road surface and the on-snow performance in a good balance.

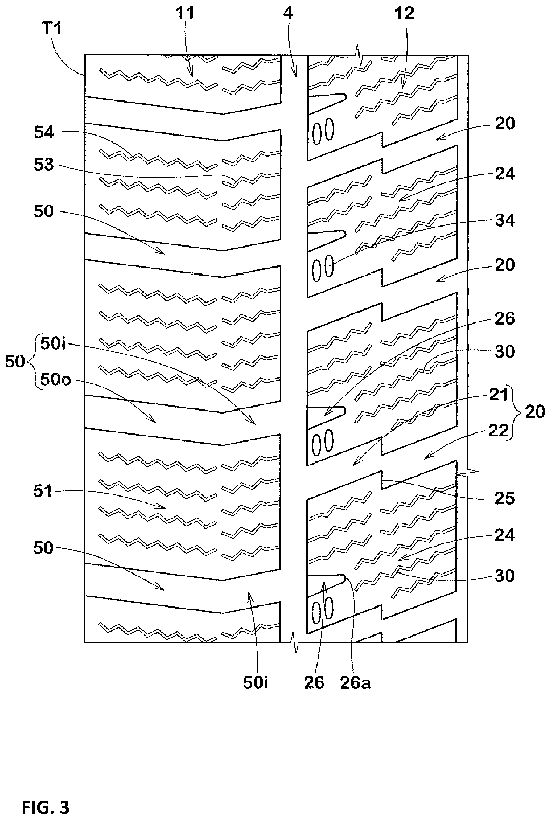

FIG. 3 shows an enlarged view of the outer shoulder land region 11 and the outer middle land region 12. As shown in FIG. 3, the outer middle land region 12 includes a plurality of outer middle blocks 24 divided by a plurality of outer middle axial grooves 20 each crossing the outer middle land region 12 in the tire axial direction.

Each of the outer middle axial grooves 20 includes a first groove portion 21 extending in the tire axial direction on the first tread edge T1 side and a second groove portion 22 extending in the tire axial direction on the second tread edge T2 side. Further, the second groove portion 22 is displaced to one side in the tire circumferential direction relative to the first groove portion 21, therefore, each of the outer middle axial grooves 20 has two circumferential edges 25 extending along the tire circumferential direction between edges of the first groove portion 21 and edges of second groove portion 22. These outer middle axial grooves 20 configured as such help to increase the on-snow cornering performance, as the circumferential edges 25 provide large frictional force in the tire axial direction.

The outer middle axial grooves 20 are inclined to the first side with respect to the tire axial direction. An angle of each of the outer middle axial grooves 20 with respect to the tire axial direction (meaning the angles of the first groove portion 21 and the second groove portion 22) is, for example, 45 degrees or less, preferably 15 to 25 degrees. The outer middle axial grooves 20 configured as such are helpful for improving the on-snow cornering performance.

It is preferred that the two circumferential edges 25 are included in the central portion of each of the outer middle blocks 24 when, for example, divided into three equal portions by virtual planes extending parallel to the tire circumferential direction. Each of the circumferential edges 25 has an angle of 10 degrees or less, preferably 5 degrees or less with respect to the tire circumferential direction, for example. As a more preferred configuration, the circumferential edges 25 in the present embodiment are arranged parallel to the tire circumferential direction. The circumferential edges 25 configured as such provide a large reaction force in the tire axial direction during running on snow, therefore, improvement in the on-snow cornering performance is ensured.

It is preferred that the outer middle land region 12 is provided with a plurality of terminating grooves 26. Each of the terminating grooves 26 extends from the outer shoulder circumferential groove 4 to terminate to have a closed end within the outer middle land region 12. In a more preferred embodiment, the terminating grooves 26 terminate at positions on the first tread edge T1 side of the circumferential edges 25 of the outer middle axial grooves 20. Further, each of the terminating grooves 26 has a length in the tire axial direction smaller than a length in the tire axial direction of the inner groove portion (50i) of each of the outer shoulder axial grooves 50. It is possible that the terminating grooves 26 configured as such improve the on-snow cornering performance without compromising the noise performance.

Each of the terminating grooves 26 has a groove width gradually and continuously decreasing from the outer shoulder circumferential groove 4 to a terminating end (26a) thereof, for example. The terminating grooves 26 are inclined to the first side with respect to the tire axial direction, for example. Each of the terminating grooves 26 has an angle of, for example, 45 degrees or less, preferably 10 to 25 degrees with respect to the tire axial direction.

In a more preferred embodiment, each of the terminating grooves 26 has an axially outer end facing an axially inner end of a respective one of the outer shoulder axial grooves 50. It should be noted that this configuration at least means an embodiment in which a region obtained by extending an opening portion of each of the terminating grooves 26 opening at the outer shoulder circumferential groove 4 parallel to the tire axial direction while maintaining the width of the opening portion (hereinafter referred to as "terminating groove extension region") at least partially overlaps with an opening portion of a respective one of the outer shoulder axial grooves 50 opening at the outer shoulder circumferential groove 4. In a preferred embodiment, 50% or more of the width in the tire circumferential direction of the terminating groove extension region overlaps with the opening portion of the respective outer shoulder axial groove 50. Therefore, it is possible that the outer shoulder axial grooves 50 and the terminating grooves 26 work together to form large snow blocks, thereby, the on-snow cornering performance is further improved.

Each of the outer middle blocks 24 is provided with a plurality of outer middle sipes 30. Each of the outer middle sipes 30 is inclined to the first side, for example. Each of the outer middle sipes 30 has an angle of 15 to 25 degrees with respect to the tire axial direction, for example. When the sipes extend in a wavy manner, the above-mentioned angle shall be measured at the centerline of the amplitude of each of the sipes.

At least one of the outer middle sipes 30 extend from the outer shoulder circumferential groove 4 or the outer crown circumferential groove 5 to have a closed terminating end within the outer middle blocks 24. It is possible that the outer middle sipes 30 configured as such improve on-snow braking performance while maintaining the rigidity of the outer middle blocks 24.

Each of the outer middle blocks 24 of the present embodiment has dimples 34 arranged between the first groove portion 21 and the terminating groove 26. These dimples 34 each has a concave area surrounded by a circumferentially elongated oval edge. The dimples 34 configured as such moderately lower the rigidity of the outer middle blocks 24 and help to suppress snow from clogging the outer middle axial grooves 20 and the terminating grooves 26.

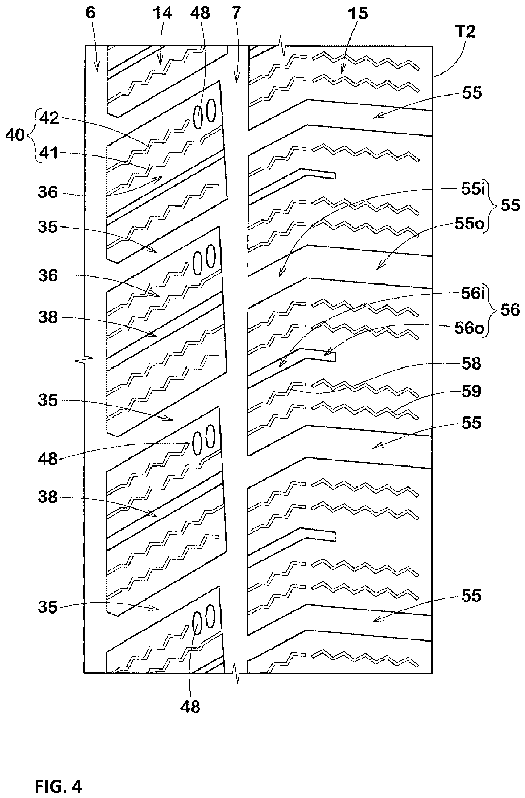

FIG. 4 shows an enlarged view of the inner middle land region 14 and the inner shoulder land region 15. As shown in FIG. 4, the inner middle land region 14 includes a plurality of inner middle blocks 36 divided by a plurality of inner middle axial grooves 35.

Each of the inner middle axial grooves 35 completely crosses the inner middle land region 14 in the tire axial direction, for example. The inner middle axial grooves 35 are inclined to the first side with respect to the tire axial direction, for example. Each of the inner shoulder axial grooves 55 has an angle of 15 to 25 degrees with respect to the tire axial direction, for example.

In a preferred embodiment, each of the inner middle axial grooves 35 has an axially outer end facing an axially inner end of a respective one of the inner shoulder terminating grooves 56. It should be noted that this configuration at least means an embodiment in which a region obtained by extending an opening portion of each of the inner middle axial grooves 35 opening at the inner shoulder circumferential groove 7 parallel to the tire axial direction while maintaining the width of the opening portion (hereinafter referred to as "inner middle axial groove extension region") at least partially overlaps with an opening portion of a respective one of the inner shoulder terminating grooves 56 opening at the inner shoulder circumferential groove 7. In a preferred embodiment, 50% or more of the width in the tire circumferential direction of the inner middle axial groove extension region overlaps with the opening portion of the respective inner shoulder terminating groove 56. Therefore, it is possible that the inner middle axial grooves 35 and the inner shoulder terminating grooves 56 work together to form large snow blocks, thereby, the on-snow cornering performance is further improved.

From the point of view of further increasing the above-described effects, it is preferred that a region obtained by extending each of the inner middle axial grooves 35 parallel to a length direction thereof overlaps with 50% or more of an opening area of the inner groove portion (56i) of a respective one of the inner shoulder terminating grooves 56 in a tread plan view.

The inner middle land region 14 is provided with a plurality of axial narrow grooves 38. Each of the axial narrow grooves 38 completely crosses the inner middle land region 14 in the tire axial direction. The axial narrow grooves 38 are inclined to the first side with respect to the tire axial direction. Further, each of the axial narrow grooves 38 has a width and a depth smaller than a width and a depth of each of the inner middle axial grooves 35. It is possible that the axial narrow grooves 38 configured as such increase edge components while maintaining the rigidity of the inner middle land region 14.

In a preferred embodiment, each of the axial narrow grooves 38 has an axially outer end facing an axially inner end of a respective one of the inner shoulder axial grooves 55. It should be noted that this configuration at least means an embodiment in which a region obtained by extending an opening portion of each of the axial narrow grooves 38 opening at the inner shoulder circumferential groove 7 parallel to the tire axial direction while maintaining the width of the opening portion (hereinafter referred to as "axial narrow groove extension region") at least partially overlaps with an opening portion of a respective one of the inner shoulder axial grooves 55 opening at the inner shoulder circumferential groove 7. In a preferred embodiment, 50% or more of the width in the tire circumferential direction of the axial narrow groove extension region overlaps with the opening portion of the respective inner shoulder axial groove 55. Therefore, the axial narrow grooves 38 are made easier to open upon contacting the ground, thereby, the frictional forces provided by the edges are increased. As a result, the on-snow performance is improved.

From the point of view of further exerting the above-described effects, it is preferred that a region obtained by extending the inner groove portion (55i) of each of the inner shoulder axial grooves 55 parallel to a length direction thereof overlaps with 50% or more of an opening area of the inner groove portion (56i) of a respective one of the axial narrow grooves 38 in the tread plan view.

Each of the inner middle blocks 36 is provided with a plurality of inner middle sipes 40. The inner middle sipes 40 include, for example, full-open sipes 41 each completely crossing a respective one of the inner middle blocks 36, and semi-open sipes 42 each extending from the inner crown circumferential groove 6 to terminate to have a closed end within a respective one of the inner middle blocks 36. The inner middle sipes 40 configured as such are helpful for improving the steering stability on a dry road surface and the on-snow performance in a good balance.

Each of the inner middle blocks 36 of the present embodiment has dimples 48 arranged between one of the semi-open sipes 42 and the inner shoulder circumferential groove 7. These dimples 48 each has a concave area surrounded by a circumferentially elongated oval edge. The dimples 48 configured as such moderately lower the rigidity of the inner middle blocks 36, therefore, it is possible that clogging of snow in the grooves around the dimples is suppressed.

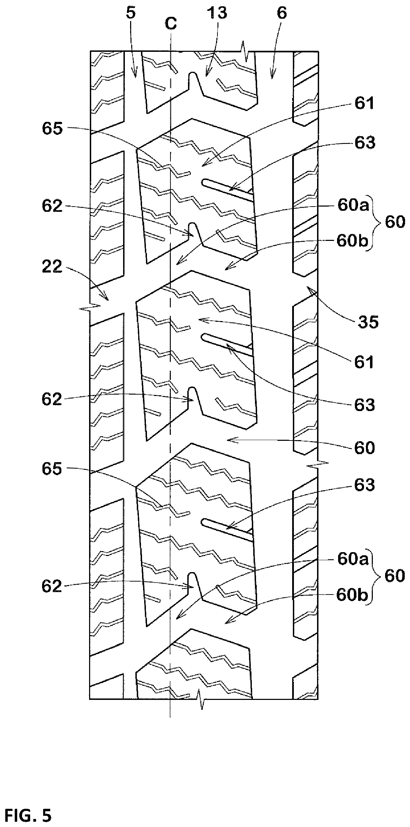

FIG. 5 shows an enlarged view of the crown land region 13. As shown in FIG. 4, the crown land region 13 includes a plurality of crown blocks 61 divided by a plurality of crown axial grooves 60.

Each of the crown axial grooves 60 includes a first crown groove portion (60a) and a second crown groove portion (60b), for example. The first crown groove portion (60a) is directly connected with the outer crown circumferential groove 5 and inclined to the first side with respect to the tire axial direction, for example. The second crown groove portion (60b) is directly connected with the inner crown circumferential groove 6 and inclined to the second side with respect to the tire axial direction, for example. It is possible that the crown axial grooves 60 configured as such compact snow firmly inside, therefore, it is possible that the on-snow performance is further improved.

The first crown groove portion (60a) has an outer end portion on the first tread edge T1 side overlapping with a region obtained by extending the second groove portion 22 of a respective one of the outer middle axial grooves 20 along a length direction of the second groove portion 22, for example. The second crown groove portion (60b) has an outer end portion on the second tread edge T2 side overlapping with a region obtained by extending an end portion on the inner crown circumferential groove 6 side of a respective one of the inner middle axial grooves 35 parallel to the tire axial direction.

Each of the crown blocks 61 is provided with a first crown terminating groove 62 and a second crown terminating groove 63. The first crown terminating groove 62 extends from a respective one of the crown axial grooves 60 to terminate with a closed end within a respective one of the crown blocks 61, for example. The second crown terminating groove 63 extends from the inner crown circumferential groove 6 to terminate with a closed end within a respective one of the crown blocks 61. The first crown terminating groove 62 and the second crown terminating groove 63 configured as such moderately lower the rigidity of the crown blocks 61, therefore, it is possible that clogging of snow in the crown axial grooves 60 and the inner crown circumferential groove 6 is suppressed.

Each of the crown blocks 61 is provided with a plurality of crown sipes 65. The crown sipes 65 are inclined to the second side, for example.

While detailed description has been made of the tire according to an embodiment of the present invention, the present invention can be embodied in various forms within the scope of the appended claims.

### [Examples]

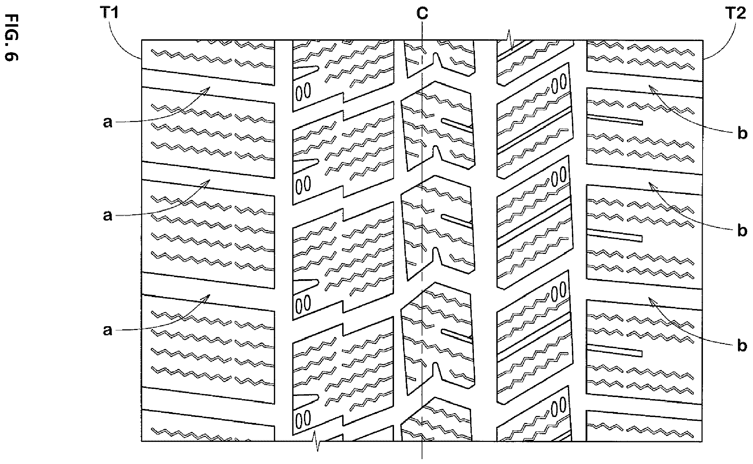

Tires of size 195/65R15 having the basic tread pattern shown in FIG. 1 were made by way of test according to the specifications listed in Tables 1 and 2. As Reference, tires having the basic tread pattern of FIG. 1 and not satisfying the specific matters of the present invention in the angular relationship between the inner groove portion and the outer groove portion regarding the outer shoulder axial grooves and the inner shoulder axial grooves were made by way of test. Further, as a tire for reference (reference tire) for comparing the noise performance, as shown in FIG. 6, tires in which outer shoulder axial grooves (a) and inner shoulder axial grooves (b) were not bent were made by way of test. The tires in Reference and the reference tires had substantially the same pattern as that shown in FIG. 1, except for the above-mentioned configuration. Each of the test tires was tested for the noise performance and the on-snow cornering performance. Common configuration and the test methods were as follows.
Tire rim: 15x6.0JJ
Tire inner pressure: 200 kPa (front wheel), 200 kPa (rear wheel)
Test vehicle: displacement of 1500 cc, front wheel drive car
Tire mounting position: all wheels

### < On-snow Cornering Performance >

While a test driver drove the test vehicle on a snowy road, the cornering performance was evaluated by the driver's feeling. The results are indicated by an evaluation point based on Reference being 100, wherein the larger the numerical value, the better the on-snow cornering performance is.

### < Noise Performance >

The maximum sound pressure of outside-vehicle noise was measured while the above test vehicle was driven on a dry road surface at a speed of 70 km/h. The results are indicated by an index based on a sound pressure decrease amount of Reference being 100, where the sound pressure decrease amount is the difference between the sound pressure of the test tire and the sound pressure of the reference tire. The larger the index, the smaller the maximum sound pressure of the noise is, which shows excellent noise performance being exerted.

The test results are shown in Tables 1 and 2.

**Table 1.**

| | | Ref. | Ex.1 | Ex.2 | Ex.3 | Ex.4 | Ex.6 | Ex.7 | Ex.8 | Ex.9 |
|---|---|---|---|---|---|---|---|---|---|---|
| Angle θ1i of Inner groove portion of Outer shoulder axial groove | | 20 | 11 | 5 | 15 | 20 | 11 | 11 | 11 | 11 |
| | [degree] | | | | | | | | | |
| Angle θ1o of Outer groove portion of Outer shoulder axial groove | | 6 | 7 | 7 | 7 | 7 | 7 | 7 | 7 | 7 |
| | [degree] | | | | | | | | | |
| Angle θ2i of Inner groove portion of Inner shoulder axial groove | | 20 | 28 | 28 | 28 | 28 | 15 | 20 | 23 | 35 |
| | [degree] | | | | | | | | | |
| Angle θ2o of Outer groove portion of Inner shoulder axial groove | | 6 | 5 | 5 | 5 | 5 | 5 | 5 | 5 | 5 |
| | [degree] | | | | | | | | | |
| Angle θ2i - Angle θ1i | [degree] | 0 | 17 | 23 | 13 | 8 | 4 | 9 | 12 | 24 |
| Angle θ1o - Angle θ2o | [degree] | 0 | 2 | 2 | 2 | 2 | 2 | 2 | 2 | 2 |
| On-snow cornering performance | | 100 | 108 | 108 | 107 | 106 | 104 | 105 | 107 | 106 |
| | [evaluation point] | | | | | | | | | |
| Noise performance | [index] | 100 | 122 | 124 | 118 | 114 | 108 | 113 | 120 | 126 |

**Table 2.**

| | | Ex.10 | Ex.11 | Ex.12 | Ex. 13 | Ex.14 | Ex. 15 |
|---|---|---|---|---|---|---|---|
| Angle θ1i of Inner groove portion of Outer shoulder axial groove | | 11 | 11 | 11 | 11 | 11 | 11 |
| | [degree] | | | | | | |
| Angle θ1o of Outer groove portion of Outer shoulder axial groove | | 6 | 10 | 15 | 20 | 7 | 7 |
| | [degree] | | | | | | |
| Angle θ2i of Inner groove portion of Inner shoulder axial groove | | 28 | 28 | 28 | 28 | 28 | 28 |
| | [degree] | | | | | | |
| Angle θ2o of Outer groove portion of Inner shoulder axial groove | | 5 | 5 | 5 | 5 | 2 | 4 |
| | [degree] | | | | | | |
| Angle θ2i - Angle θ1i | [degree] | 17 | 17 | 17 | 17 | 17 | 17 |
| Angle θ1o - Angle θ2o | [degree] | 1 | 5 | 10 | 15 | 5 | 3 |
| On-snow cornering performance | | 106 | 107 | 108 | 110 | 108 | 108 |
| | [evaluation point] | | | | | | |
| Noise performance | [index] | 122 | 118 | 113 | 111 | 117 | 122 |

As shown in Tables 1 and 2, it was confirmed that the tires in Examples exerted excellent on-snow cornering performance. Further, it was confirmed that the noise performance of the tires in Examples was improved.

### [Description of Reference Signs]

2 tread portion
3 circumferential groove
4 outer shoulder circumferential groove
7 inner shoulder circumferential groove
10 land region
11 outer shoulder land region
15 inner shoulder land region
50 outer shoulder axial groove
50i inner groove portion
50o outer groove portion
55 inner shoulder axial groove
55i inner groove portion
55o outer groove portion
θ1i angle of inner groove portion of outer shoulder axial groove with respect to tire axial direction
Θ2i angle of inner groove portion of inner shoulder axial groove with respect to tire axial direction
θ1o angle of outer groove portion of outer shoulder axial groove with respect to tire axial direction
θ2o angle of outer groove portion of inner shoulder axial groove with respect to tire axial direction
T1 first tread edge
T2 second tread edge

## Claims

1. A tire (1) comprising:
a tread portion (2) with a position thereof when mounted on a vehicle being specified, wherein
the tread portion (2) includes
a first tread edge (T1) to be positioned on an outer side of the vehicle when mounted on the vehicle,
a second tread edge (T2) to be positioned on an inner side of the vehicle when mounted on a vehicle,
a plurality of circumferential grooves (3) extending continuously in a tire circumferential direction between the first tread edge (T1) and the second tread edge (T2), and
a plurality of land regions (10) divided by the circumferential grooves (3), wherein
the circumferential grooves (3) include an outer shoulder circumferential groove (4) arranged closest to the first tread edge (T1) and an inner shoulder circumferential groove (7) arranged closest to the second tread edge (T2),
the land regions (10) include an outer shoulder land region (11) arranged outside the outer shoulder circumferential groove (4) in a tire axial direction and including the first tread edge (T1), and an inner shoulder land region (15) arranged outside the inner shoulder circumferential groove (7) in the tire axial direction and including the second tread edge (T2),
the outer shoulder land region (11) is provided with a plurality of outer shoulder axial grooves (50) each extending from the outer shoulder circumferential groove (4) to a position beyond the first tread edge (T1),
the inner shoulder land region (15) is provided with a plurality of inner shoulder axial grooves (55) each extending from the inner shoulder circumferential groove (7) to a position beyond the second tread edge (T2),
between the outer shoulder circumferential groove (4) and the first tread edge (T1), each of the outer shoulder axial grooves (50) includes an axially inner groove portion (50i) inclined to a first side with respect to the tire axial direction and an axially outer groove portion (50o) arranged outside the inner groove portion (50i) relative to the tire equator and inclined to a second side opposite to the first side with respect to the tire axial direction so that each of the outer shoulder axial grooves (50) is bent convexly to one side in the tire circumferential direction, and
between the inner shoulder circumferential groove (7) and the second tread edge (T2), each of the inner shoulder axial grooves (55) includes an axially inner groove portion (55i) inclined to the first side with respect to the tire axial direction and an axially outer groove portion (55o) arranged outside the inner groove portion (55i) relative to the tire equator and inclined to the second side with respect to the tire axial direction so that each of the inner shoulder axial grooves (55) is bent convexly to the other side in the tire circumferential direction,
**characterized in that**
the inner groove portion (55i) of each of the inner shoulder axial grooves (55) has an angle θ2i with respect to the tire axial direction greater than an angle θ1i of the inner groove portion (50i) of each of the outer shoulder axial grooves (50) with respect to the tire axial direction, and
the outer groove portion (55o) of each of the inner shoulder axial grooves (55) has an angle θ2o with respect to the tire axial direction smaller than an angle θ1o of the outer groove portion (50o) of each of the outer shoulder axial grooves (50) with respect to the tire axial direction.

2. The tire (1) according to claim 1, wherein a difference between the angle θ2i of the inner groove portion (55i) of each of the inner shoulder axial grooves (55) and the angle θ1i of the inner groove portion (50i) of each of the outer shoulder axial grooves (50) is 5 degrees or more and 20 degrees or less.

3. The tire (1) according to claim 1 or 2, wherein a difference between the angle θ2o of the outer groove portion(55o) of each of the inner shoulder axial grooves (55) and the angle θ1o of the outer groove portion (50o) of each of the outer shoulder axial grooves (50) is 10 degrees or less.

4. The tire (1) according to any one of claims 1 to 3, wherein the outer groove portion (50o) of each of the outer shoulder axial grooves (50) has a length (L5) in the tire axial direction larger than a length (L6) in the tire axial direction of the outer groove portion (55o) of each of the inner shoulder axial grooves (55).

5. The tire (1) according to any one of claims 1 to 4, wherein a maximum width of each of the outer shoulder axial grooves (50) is larger than a maximum width of each of the inner shoulder axial grooves (55).

6. The tire (1) according to any one of claims 1 to 5, wherein the inner shoulder land region (15) is provided with a plurality of inner shoulder terminating grooves (56) each extending from the inner shoulder circumferential groove (7) to terminate without reaching the second tread edge (T2).

7. The tire (1) according to claim 6, wherein each of the inner shoulder terminating grooves (56) has a maximum groove width smaller than a maximum groove width of each of the inner shoulder axial grooves (55).

8. The tire (1) according to claim 6 or 7, wherein each of the inner shoulder terminating grooves (56) has a maximum depth smaller than a maximum depth of each of the inner shoulder axial grooves (55).

9. The tire (1) according to any one of claims 6 to 8, wherein
between the inner shoulder circumferential groove (7) and the second tread edge (T2), each of the inner shoulder terminating grooves (56) includes an inner groove portion (56i) and an outer groove portion (56o) arranged outside the inner groove portion (56i) in the tire axial direction, and
the inner groove portion (56i) is inclined to the first side with respect to the tire axial direction and the outer groove portion (56o) is inclined to the second side with respect to the tire axial direction such that each of the inner shoulder terminating grooves (56) is bent so as to be convex to the same side as the inner shoulder axial grooves (55).

10. The tire (1) according to claim 9, wherein
each of the inner shoulder axial grooves (55) includes a bending vertex (55t) positioned between the inner groove portion (55i) and the outer groove portion (55o) thereof,
each of the inner shoulder terminating grooves (56) includes a bending vertex (56t) positioned between the inner groove portion (56i) and the outer groove portion (56o) thereof, and
the bending vertex (56t) of each of the inner shoulder terminating grooves (56) is located inside the bending vertex (55t) of each of the inner shoulder axial grooves (55) in the tire axial direction.

## Patentansprüche

1. Reifen (1), umfassend:
einen Laufflächenabschnitt (2), für den eine Positionierung von diesem bei einer Montage an einem Fahrzeug spezifiziert ist, wobei
der Laufflächenabschnitt (2) umfasst
einen ersten Laufflächenrand (T1), der bei einer Montage an dem Fahrzeug auf einer äußeren Seite des Fahrzeugs zu positionieren ist,
einen zweiten Laufflächenrand (T2), der bei einer Montage an einem Fahrzeug an einer inneren Seite des Fahrzeugs zu positionieren ist,
mehrere Umfangsrillen (3), die sich zwischen dem ersten Laufflächenrand (T1) und dem zweiten Laufflächenrand (T2) kontinuierlich in einer Reifenumfangsrichtung erstrecken, und
mehrere Landbereiche (10), die durch die Umfangsrillen (3) geteilt sind, wobei
die Umfangsrillen (3) eine äußere Schulterumfangsrille (4), die am nächsten an dem ersten Laufflächenrand (T1) angeordnet ist, und eine innere Schulterumfangsrille (7) umfassen, die am nächsten an dem zweiten Laufflächenrand (T2) angeordnet ist,
die Landbereiche (10) einen äußeren Schulterlandbereich (11), der in einer Reifenaxialrichtung außerhalb der äußeren Schulterumfangsrille (4) angeordnet ist und den ersten Laufflächenrand (T1) umfasst, und einen inneren Schulterlandbereich (15) umfassen, der in der Reifenaxialrichtung außerhalb der inneren Schulterumfangsrille (7) angeordnet ist und den zweiten Laufflächenrand (T2) umfasst,
der äußere Schulterlandbereich (11) mit mehreren äußeren Schulteraxialrillen (50) versehen ist, die sich jeweils von der äußeren Schulterumfangsrille (4) bis zu einer Position jenseits des ersten Laufflächenrandes (T1) erstrecken,
der innere Schulterlandbereich (15) mit mehreren inneren Schulteraxialrillen (55) versehen ist, die sich jeweils von der inneren Schulterumfangsrille (7) bis zu einer Position jenseits des zweiten Laufflächenrandes (T2) erstrecken,
zwischen der äußeren Schulterumfangsrille (4) und dem ersten Laufflächenrand (T1) jede der äußeren Schulteraxialrillen (50) einen axial inneren Rillenabschnitt (50i), der bezogen auf die Reifenaxialrichtung zu einer ersten Seite geneigt ist, und einen axial äußeren Rillenabschnitt (50o) aufweist, der relativ zu dem Reifenäquator außerhalb des inneren Rillenabschnitts (50i) angeordnet ist und zu einer zweiten Seite geneigt ist, die der ersten Seite bezogen auf die Reifenaxialrichtung entgegengesetzt ist, sodass jede der äußeren Schulteraxialrillen (50) zu einer Seite in der Reifenumfangsrichtung konvex gebogen ist, und
zwischen der inneren Schulterumfangsrille (7) und dem zweiten Laufflächenrand (T2) jede der inneren Schulteraxialrillen (55) einen axial inneren Rillenabschnitt (55i), der bezogen auf die Reifenaxialrichtung zu der ersten Seite geneigt ist, und einen axial äußeren Rillenabschnitt (55o) aufweist, der relativ zu dem Reifenäquator außerhalb des inneren Rillenabschnitts (55i) angeordnet ist und bezogen auf die Reifenaxialrichtung zu der zweiten Seite geneigt ist, sodass jede der inneren Schulteraxialrillen (55) zu der anderen Seite in der Reifenumfangsrichtung konvex gebogen ist, **dadurch gekennzeichnet, dass**
der innere Rillenabschnitt (55i) jeder der inneren Schulteraxialrillen (55) einen Winkel θ2i bezogen auf die Reifenaxialrichtung aufweist, der größer als ein Winkel θ1i des inneren Rillenabschnitts (50i) jeder der äußeren Schulteraxialrillen (50) bezogen auf die Reifenaxialrichtung ist, und
der äußere Rillenabschnitt (55o) jeder der inneren Schulteraxialrillen (55) einen Winkel θ2o bezogen auf die Reifenaxialrichtung aufweist, der kleiner als ein Winkel θ1o des äußeren Rillenabschnitts (50o) jeder der äußeren Schulteraxialrillen (50) bezogen auf die Reifenaxialrichtung ist.

2. Reifen (1) nach Anspruch 1, wobei eine Differenz zwischen dem Winkel θ2i des inneren Rillenabschnitts (55i) jeder der inneren Schulteraxialrillen (55) und dem Winkel θ1i des inneren Rillenabschnitts (50i) jeder der äußeren Schulteraxialrillen (50) 5 Grad oder mehr und 20 Grad oder weniger beträgt.

3. Reifen (1) nach Anspruch 1 oder 2, wobei eine Differenz zwischen dem Winkel θ2o des äußeren Rillenabschnitts (55o) jeder der inneren Schulteraxialrillen (55) und dem Winkel θ1o des äußeren Rillenabschnitts (50o) jeder der äußeren Schulteraxialrillen (50) 10 Grad oder weniger beträgt.

4. Reifen (1) nach einem der Ansprüche 1 bis 3, wobei der äußere Rillenabschnitt (50o) jeder der äußeren Schulteraxialrillen (50) eine Länge (L5) in der Reifenaxialrichtung aufweist, die größer als eine Länge (L6) des äußeren Rillenabschnitts (55o) jeder der inneren Schulteraxialrillen (55) in der Reifenaxialrichtung ist.

5. Reifen (1) nach einem der Ansprüche 1 bis 4, wobei eine maximale Breite jeder der äußeren Schulteraxialrillen (50) größer als eine maximale Breite jeder der inneren Schulteraxialrillen (55) ist.

6. Reifen (1) nach einem der Ansprüche 1 bis 5, wobei der innere Schulterlandbereich (15) mit mehreren inneren Schulterendrillen (56) versehen ist, die sich jeweils von der inneren Schulterumfangsrille (7) erstrecken, um zu enden, ohne den zweiten Laufflächenrand (T2) zu erreichen.

7. Reifen (1) nach Anspruch 6, wobei jede der inneren Schulterendrillen (56) eine maximale Rillenbreite aufweist, die kleiner als eine maximale Rillenbreite jeder der inneren Schulteraxialrillen (55) ist.

8. Reifen (1) nach Anspruch 6 oder 7, wobei jede der inneren Schulterendrillen (56) eine maximale Tiefe aufweist, die kleiner als eine maximale Tiefe jeder der inneren Schulteraxialrillen (55) ist.

9. Reifen (1) nach einem der Ansprüche 6 bis 8, wobei
zwischen der inneren Schulterumfangsrille (7) und dem zweiten Laufflächenrand (T2) jede der inneren Schulterendrillen (56) einen inneren Rillenabschnitt (56i) und einen äußeren Rillenabschnitt (56o) aufweist, der in der Reifenaxialrichtung außerhalb des inneren Rillenabschnitts (56i) angeordnet ist, und
der innere Rillenabschnitt (56i) bezogen auf die Reifenaxialrichtung zu der erste Seite geneigt ist und der äußere Rillenabschnitt (56o) bezogen auf die Reifenaxialrichtung zu der zweiten Seite geneigt ist, sodass jede der inneren Schulterendrillen (56) derart gebogen ist, dass sie zu der gleichen Seite wie die inneren Schulteraxialrillen (55) konvex ist.

10. Reifen (1) nach Anspruch 9, wobei
jede der inneren Schulteraxialrillen (55) einen Biegungsscheitel (55t) aufweist, der zwischen deren innerem Rillenabschnitt (55i) und deren äußerem Rillenabschnitt (55o) positioniert ist,
jede der inneren Schulterendrillen (56) einen Biegungsscheitel (56t) aufweist, der zwischen deren innerem Rillenabschnitt (56i) und deren äußerem Rillenabschnitt (56o) positioniert ist, und
der Biegungsscheitel (56t) jeder der inneren Schulterendrillen (56) in der Reifenaxialrichtung innerhalb des Biegungsscheitels (55t) jeder der inneren Schulteraxialrillen (55) angeordnet ist.

## Revendications

1. Pneumatique (1) comprenant :
une portion formant bande de roulement (2), une position de celle-ci étant spécifiée quand le pneumatique est monté sur un véhicule, dans lequel la portion formant bande de roulement (2) inclut
un premier bord de bande de roulement (T1) devant être positionné sur un côté extérieur du véhicule quand le pneumatique est monté sur le véhicule,
un second bord de bande de roulement (T2) devant être positionné sur un côté intérieur du véhicule quand le pneumatique est monté sur un véhicule,
une pluralité de rainures circonférentielles (3) s'étendant en continu dans une direction circonférentielle du pneumatique entre le premier bord de bande de roulement (T1) et le second bord de bande de roulement (T2), et
une pluralité de régions en relief (10) divisées par les rainures circonférentielles (3), dans lequel
les rainures circonférentielles (3) incluent une rainure circonférentielle d'épaulement extérieure (4) agencée au plus près du premier bord de roulement (T1) et une rainure circonférentielle d'épaulement intérieure (7) agencée au plus près du second bord de bande de roulement (T2),
les régions en relief (10) incluent une région en relief d'épaulement extérieure (11) agencée à l'extérieur de la rainure circonférentielle d'épaulement extérieure (4) dans une direction axiale du pneumatique et incluant le premier bord de bande de roulement (T1), et une région en relief d'épaulement intérieure (15) agencée à l'extérieur de la rainure circonférentielle d'épaulement intérieure (7) dans la direction axiale du pneumatique et incluant le second bord de bande de roulement (T2),
la région en relief d'épaulement extérieure (11) est dotée d'une pluralité de rainures axiales d'épaulement extérieures (50) s'étendant chacune depuis la rainure circonférentielle d'épaulement extérieure (4) jusqu'à une position au-delà du premier bord de bande de roulement (T1),
la région en relief d'épaulement intérieure (15) est dotée d'une pluralité de rainures axiales d'épaulement intérieures (55) s'étendant chacune depuis la rainure circonférentielle d'épaulement intérieure (7) jusqu'à une position au-delà du second bord de bande de roulement (T2),
entre la rainure circonférentielle d'épaulement extérieure (4) et le premier bord de bande de roulement (T1), chacune des rainures axiales d'épaulement extérieures (50) inclut une portion de rainure axialement intérieure (50i) inclinée vers un premier côté par rapport à la direction axiale du pneumatique et une portion de rainure axialement extérieure (50o) agencée à l'extérieur de la portion de rainure intérieure (50i) relativement à l'équateur de pneumatique et inclinée vers un second côté opposé au premier côté par rapport à la direction axiale du pneumatique de telle sorte que chacune des rainures axiales d'épaulement extérieures (50) est cintrée de manière convexe vers un côté dans la direction circonférentielle du pneumatique, et
entre la rainure circonférentielle d'épaulement intérieure (7) et le second bord de bande de roulement (T2), chacune des rainures axiales d'épaulement intérieures (55) inclut une portion de rainure axialement intérieure (55i) inclinée vers le premier côté par rapport à la direction axiale du pneumatique et une portion de rainure axialement extérieure (55o) agencée à l'extérieur de la portion de rainure intérieure (55i) relativement à l'équateur de pneumatique et inclinée vers le second côté par rapport à la direction axiale du pneumatique de telle sorte que chacune des rainures axiales d'épaulement intérieures (55) est cintrée de manière convexe vers l'autre côté dans la direction circonférentielle du pneumatique,
**caractérisé en ce que**
la portion de rainure intérieure (55i) de chacune des rainures axiales d'épaulement intérieures (55) a un angle θ2i par rapport à la direction axiale du pneumatique plus grand qu'un angle θ1i de la portion de rainure intérieure (50i) de chacune des rainures axiales d'épaulement extérieures (50) par rapport à la direction axiale du pneumatique, et
la portion de rainure extérieure (55o) de chacune des rainures axiales d'épaulement intérieures (55) a un angle θ2o par rapport à la direction axiale du pneumatique plus petit qu'un angle θ1o de la portion de rainure extérieure (50o) de chacune des rainures axiales d'épaulement extérieures (50) par rapport à la direction axiale du pneumatique.

2. Pneumatique (1) selon la revendication 1, dans lequel une différence entre l'angle θ2i de la portion de rainure intérieure (55i) de chacune des rainures axiales d'épaulement intérieures (55) et l'angle angle θ1i de la portion de rainure intérieure (50i) de chacune des rainures axiales d'épaulement extérieures (50) est de 5 degrés ou plus et de 20 degrés ou moins.

3. Pneumatique (1) selon la revendication 1 ou 2, dans lequel une différence entre l'angle θ2o de la portion de rainure extérieure (55o) de chacune des rainures axiales d'épaulement intérieures (55) et l'angle θ1o de la portion de rainure extérieure (50o) de chacune des rainures axiales d'épaulement extérieures (50) est de 10 degrés ou moins.

4. Pneumatique (1) selon l'une quelconque des revendications 1 à 3, dans lequel la portion de rainure extérieure (55o) de chacune des rainures axiales d'épaulement extérieures (50) a une longueur (L5) dans la direction axiale du pneumatique plus grande qu'une longueur (L6) dans la direction axiale du pneumatique de la portion de rainure extérieure (55o) de chacune des rainures axiales d'épaulement intérieures (55).

5. Pneumatique (1) selon l'une quelconque des revendications 1 à 4, dans lequel une largeur maximum de chacune des rainures axiales d'épaulement extérieures (50) est plus grande qu'une largeur maximum de chacune des rainures axiales d'épaulement intérieures (55).

6. Pneumatique (1) selon l'une quelconque des revendications 1 à 5, dans lequel la région en relief d'épaulement intérieure (15) est dotée d'une pluralité de rainures de terminaison d'épaulement intérieures (56) s'étendant chacune depuis la rainure circonférentielle d'épaulement intérieure (7) pour se terminer sans atteindre le second bord de bande de roulement (T2).

7. Pneumatique (1) selon la revendication 6, dans lequel chacune des rainures de terminaison d'épaulement intérieures (56) a une largeur de rainure maximum plus petite qu'une largeur de rainure maximum de chacune des rainures axiales d'épaulement intérieures (55).

8. Pneumatique (1) selon la revendication 6 ou 7, dans lequel chacune des rainures de terminaison d'épaulement intérieures (56) a une profondeur maximum plus petite qu'une profondeur maximum de chacune des rainures axiales d'épaulement intérieures (55).

9. Pneumatique (1) selon l'une quelconque des revendications 6 à 8, dans lequel
entre la rainure circonférentielle d'épaulement intérieure (7) et le second bord de bande de roulement (T2), chacune des rainures de terminaison d'épaulement intérieures (56) inclut une portion de rainure intérieure (56i) et une portion de rainure extérieure (56o) agencée à l'extérieur de la portion de rainure intérieure (56i) dans la direction axiale du pneumatique, et
la portion de rainure intérieure (56i) est inclinée vers le premier côté par rapport à la direction axiale du pneumatique et la portion de rainure extérieure (56o) est inclinée vers le second côté par rapport à la direction axiale du pneumatique de telle sorte que chacune des rainures de terminaison d'épaulement intérieures (56) est cintrée de manière à être convexe vers le même côté que les rainures axiales d'épaulement intérieures (55).

10. Pneumatique (1) selon la revendication 9, dans lequel
chacune des rainures axiales d'épaulement intérieures (55) inclut un sommet de cintrage (55t) positionné entre la portion de rainure intérieure (55i) et la portion de rainure extérieure (55o) de celle-ci,
chacune des rainures de terminaison d'épaulement intérieures (56) inclut un sommet de cintrage (56t) positionné entre la portion de rainure intérieure (56i) et la portion de rainure extérieure (56o) de celle-ci, et
le sommet de cintrage (56t) de chacune des rainures de terminaison d'épaulement intérieures (56) est situé à l'intérieur du sommet de cintrage (55t) de chacune des rainures axiales d'épaulement intérieures (55) dans la direction axiale du pneumatique.
